# EUROPEAN PATENT SPECIFICATION

(11) **EP 3 702 947 B1**
(45) Date of publication and mention of the grant of the patent: **20.10.2021**
(21) Application number: 19160232.5
(22) Date of filing: 01.03.2019
(51) Int. Cl.: G06F 21/52, G06F 21/76, G06F 21/56, H04L 29/06

(54) **METHOD FOR VERIFYING AT RUNTIME OF A HARDWARE-APPLICATION COMPONENT A CURRENT CONFIGURATION SETTING OF AN EXECUTION ENVIRONMENT PROVIDED BY A CONFIGURABLE HARDWARE MODULE**
VERFAHREN ZUR VERIFIZIERUNG, BEI LAUFZEIT EINER KOMPONENTE EINER HARDWARE-ANWENDUNG, EINER GEGENWÄRTIGEN KONFIGURATIONSEINSTELLUNG EINER DURCH EIN KONFIGURIERBARES HARDWARE-MODUL BEREITGESTELLTEN AUSFÜHRUNGSUMGEBUNG
PROCÉDÉ POUR VÉRIFIER, LORS DE L'EXÉCUTION D'UN COMPOSANT D'APPLICATION MATÉRIELLE, D'UN RÉGLAGE DE CONFIGURATION DE COURANT D'UN ENVIRONNEMENT D'EXÉCUTION FOURNI PAR UN MODULE MATÉRIEL CONFIGURABLE

(43) Date of publication of application: 02.09.2020
(73) Proprietor: Siemens Aktiengesellschaft, 80333 München (DE)
(72) Inventor: Aschauer, Hans, 81829 München (DE); Falk, Rainer, 85586 Poing (DE); Feist, Christian Peter, 80689 München (DE); Fries, Steffen, 85598 Baldham (DE); Maftun, Aliza, 81549 München (DE); Seuschek, Hermann, 81373 München (DE); Zeschg, Thomas, 81543 München (DE)

(56) References cited:
- US-B1- 8 766 662
- US-B1- 10 031 993
- AIMEE COUGHLIN ET AL: "Breaking the Trust Dependence on Third Party Processes for Reconfigurable Secure Hardware", PROCEEDINGS OF THE 2019 ACM/SIGDA INTERNATIONAL SYMPOSIUM ON FIELD-PROGRAMMABLE GATE ARRAYS , FPGA '19, 24 February 2019 (2019-02-24), pages 282-291, XP055610291, New York, New York, USA DOI: 10.1145/3289602.3293895 ISBN: 978-1-4503-6137-8
- Anonymous: "Continuous verification of configuration after pro... - Community Forums", , 26 July 2018 (2018-07-26), XP055610341, Retrieved from the Internet: URL:https://forums.xilinx.com/t5/Configura tion/Continuous-verification-of-configurat ion-after-programming/td-p/875679 [retrieved on 2019-08-01]

## Description

The invention relates to a method for verifying a runtime configuration setting of an execution environment provided by a configurable hardware module.

Embedded devices, such as electronic control units (ECU), industrial personal computers (PC), internet of things (IoT) devices are employed for various tasks in industrial processes. The correct and unmanipulated functioning of said devices is vital as they are also used for monitoring and/or controlling critical processes (e.g. availability, reliability, real-time, and safety). Additionally, the growing trends for industry 4.0 scenarios have led to an increase in the networking of industrial devices for various purposes, such as monitoring, remote control, and analysis. The industrial devices become more prone to attacks with the increase in networked devices.

Since the industrial embedded devices serve for a long usage period (usually 10 to 20 years, sometimes 30 to 40 years) in field (industrial environment), they experience dynamically changing environments. This may lead to the requirement of developing flexible embedded devices that can cope up with the ever-changing environments. This can be achieved by employing an approach similar to smart phone applications that can be downloaded/installed/upgraded on runtime. In the future, a similar approach will be supported by the industrial devices.

Besides software-applications also hardware-application components can be realized by using reconfigurable hardware. A hardware-application component makes use of partial reconfiguration features of, for instance, field programmable gate arrays (FPGAs), FPGA system-on-a-chip (SoC), application-specific integrated circuit (ASIC) SoC with embedded FPGA, and application-specific standard products (ASSP), SoCs with embedded FPGA. A hardware-application can be an independent stand-alone application, such as a hardware-application component, or it can be part of a software-hardware application bundle.

FPGAs that leverage partial reconfiguration to reconfigure parts of the hardware on-the-go are available in the market, such as Intel Cyclone V, Intel Arria 10. On a partially reconfigurable FPGA, a hardware-application can be instantiated within a partial reconfiguration region of a reconfigurable hardware as a hardware-application component.

The integrity protection of a hardware-application execution environment is vital, especially if the hardware-application instantiated as a hardware-application component on a reconfigurable hardware performs security-critical functionalities, such as encryption/decryption, key management, or key agreement. The hardware-application environment includes its allowed set of interfaces. When the embedded device is in-field, there is the chance that the hardware application component is compromised not only by the hardware attacks such as hardware trojans, compromised hardware apps, side channel attacks, fault injection, IC depackaging and delayering but also by software attacks.

A common approach in context of provisioning a secure environment for execution of software applications is the Intel security guard extensions (SGX). Intel SGX intends to reduce the application attack surface be introducing the concept of enclaves, i.e. trusted execution environments. An enclave is capable of attesting its integrity to a local and a remote entity, using quoting enclaves and Intel enhanced private identifier (EPID).

This approach is inefficient because it needs to provide additional execution environments that can be trusted for executing an application.

US 8,766,662 B1 describes a method for operating a programmable device. A master summary is accessed and original configuration data are loaded. Further, current summary data are generated by performing a summary operation of a current configuration data of the configuration registers of the programmable device, comparing the current summary data with the master summary data, and performing an exception action if the current summary data does not match with the master summary data.

Aimee Coughlin ET AL: "Breaking the trust dependence on third party processes for reconfigurable secure hardware" describes an approach where the FPGA is designed to have control over its own re-programmability, and allowing it to determine when to allow updates to itself.

Accordingly, it is an objective of the present invention to provide a solution that verifies the hardware-application environment at runtime of the hardware-application component to prove integrity of the execution environment.

This objective is achieved according to a first aspect of the present invention by a method for verifying a runtime configuration setting of an execution environment provided by a configurable hardware module comprising the features of claim 1.

The invention provides according to the first aspect a method for verifying at runtime of a hardware-application a current configuration setting of an execution environment provided by a configurable hardware module, wherein the execution environment is used for execution of at least one hardware-application. The method comprises the features of patent claim 1.

In connection with the invention, "hardware application" can be understood to mean, for instance, a component, in particular a software component that is written, for instance, in Very High Speed Integrated Circuit Hardware Description Language (VHDL) or in Verilog HDL and instantiated on a configurable hardware component, for instance, a FPGA. The configuration data of the hardware application describe the layout of the hardware application component that has can be synthesised in hardware on the configurable hardware module. Therefore, the hardware application describes a configuration of, for instance, a digital circuit that can be uploaded in the execution environment of the configurable hardware module. A hardware application component is an instantiated and executed hardware application. The configurable hardware component may comprise a plurality of reconfigurable parts that are described by a configuration specification. The configuration specification comprises for instance a floor plan that describes which parts of the reconfigurable hardware component are reconfigurable at runtime. This has the advantage that at runtime hardware applications comprising, for instance, different and/or other hardware functionality can be uploaded on the reconfigurable hardware module.

The following advantages and explanations are not necessarily the result of the object of the independent claims. Rather, they may be advantages and explanations that only apply to certain embodiments or variants.

An advantage of the method for verifying at runtime of a hardware-application component a current configuration setting of an execution environment provided by a configurable hardware module is that a hardware-application component can monitor and determine the integrity of its execution environment at runtime. A hardware-application developer can define the configuration of the execution environment of the hardware-application. Once the hardware-application is placed in its assigned execution environment, for instance, the partial reconfigurable region (PRR), it can monitor and verify that its execution environment is valid and has not changed after the first execution.

The invention is beneficially especially in case to protect integrity of the hardware-application components when the embedded devices are deployed in the industrial environment. In case, an attacker would try to gain access by manipulating the input/output (I/O) configuration of the partial reconfiguration region, the hardware application component would detect the mismatch in the configuration and depending on the configured policy of the hardware application component, the hardware-application component may lock its secrets, terminate its operations, and/or wipe the memory.

Furthermore, advantageously the invention is useful for licensing. A hardware-application component can be restricted to run only within a whitelisted execution environment. The whitelist approach describes in principle that everything that is not explicitly specified on the whitelist is prohibited. Accordingly, only the desired and trustworthy entries are found in the whitelist. The entries in the list therefore represent the exceptions to the general prohibition rule. Therefore, in case the device or the device specification does not match the whitelist of the allowed device specifications, the hardware-application component is not executed.

The invention further provides according to a second aspect a configurable hardware module configured to receive, instantiate, and execute at least one hardware-application as a hardware-application component, executable in at least one execution environment of the configurable hardware module comprising the features of patent claim 13.

Further, a hardware intrusion detection system can be realized as a hardware-application component. A hardware-application component can detect changes, for instance, manipulations of other components and to provide an alert if a change was detected. Further, it can limit the functionality of the other components, respectively stop full operation.

In this sense, further components being in communication with the hardware-application component are also protected. They are at least protected from the fact that they might be using ambiguousness hardware-application components.

In a possible embodiment of the method according to the first aspect of the present invention the hardware-application component changes into a hardware operation mode if the determined current configuration setting of the execution environment does not match the initial configuration setting, wherein the hardware operation mode comprises generating an alarm.

In this way, a hardware-application component developer is alarmed and the hardware-application component can be stopped. A possible compromise can be detected and further damage can be prevented.

In a possible embodiment of the method according to the first aspect of the present invention the hardware-application component changes into a hardware operation mode if the determined current configuration setting of the execution environment does not match the initial configuration setting, wherein the hardware operation mode comprises terminating the execution of the hardware-application component.

In this way, the hardware-application component and for instance its security-critical functionalities are stopped and are no longer available. The risk for data loss is minimized.

In a possible embodiment of the method according to the first aspect of the present invention the hardware-application component changes into a hardware operation mode if the determined current configuration setting of the execution environment does not match the initial configuration setting, wherein the hardware operation mode comprises disabling the access to certain functionalities of the hardware-application component.

In this way, the application-hardware component is further running but with limited functionalities, which for instance do not provide security-critical functionalities. Thus, the security-critical functionalities are protected.

In a possible embodiment of the method according to the first aspect of the present invention the hardware-application component changes into a hardware operation mode if the determined current configuration setting of the execution environment does not match the initial configuration setting, wherein the hardware operation mode comprises erasing data of the hardware-application component.

In this way, a loss of data due to compromising is impossible.

In a further possible embodiment of the method according to the first aspect of the present invention the execution environment of the configurable hardware module comprises a reconfiguration region, RR, of the configurable hardware module and/or at least one partial reconfiguration region, PRR, of the reconfiguration region, RR, of the configurable hardware module.

Due to the possibility to reconfigure regions of the configurable hardware module or to partial reconfigure regions of the reconfiguration region, it is possible to use hardware in a more flexible way and to adapt the hardware according to changing demands and requirement. Especially it is possible to reconfigure the configurable hardware module at runtime.

In a still further possible embodiment of the method according to the first aspect of the present invention the configurable hardware module comprises a field programmable gate array, FPGA, an application specific integrated circuit, ASIC, or an application specific standard product, ASSP.

In the method according to the first aspect of the present invention the initial configuration setting is determined while executing the instantiated hardware-application component the first time in the execution environment of the configurable hardware module.

Advantageously, when a hardware-application is loaded and executed in the execution environment of the configurable hardware module for the first time, the hardware-application component saves the determined current configuration setting (fingerprint of the execution environment) as an initial configuration setting. This initial configuration setting is stored and used for comparison with further snapshots of the current configuration setting of the execution environment taken at runtime of the hardware-application component. The snapshot may be taken periodically or randomly. If the initial configuration setting and the current configuration setting match, the hardware-application component will continue working. Depending on the defined policy, in case of a mismatch between the initial configuration setting and the current configuration setting, an alarm can be generated, or the operation of the hardware-application component can be terminated, or the access to certain functionality of the hardware-application component can be disabled, or sensitive hardware-application data can be erased.

In a still further possible embodiment of the method according to the first aspect of the present invention the initial configuration setting is provided by the hardware-application.

Advantageously, the hardware-application can comprise the initial configuration setting. This initial configuration setting includes the specification of the execution environment that executes the hardware-application component.

In a still further possible embodiment of the method according to the first aspect of the present invention the initial configuration setting comprises reference information of valid execution environments for executing the hardware-application component.

Advantageously, the initial configuration setting, for instance, is hardcoded in the hardware-application and is included in the hardware-application component after instantiation. The hardware-application component will compare the initial configuration setting with a snapshot of a current configuration setting of the execution environment that executes the hardware-application component and if the initial configuration setting matches the current configuration setting, the hardware-application component continues running, otherwise it follows the policy to handle a mismatch.

In the method according to the first aspect of the present invention the initial configuration setting comprises information of the design identifier of the configurable hardware module.

Advantageously, a configurable hardware module comprises a specific and unique design identifier (ID) that supports identification and evaluation of the configurable hardware module to prevent an execution of the hardware-application component on a not authorized hardware.

In a still further possible embodiment of the method according to the first aspect of the present invention the initial configuration setting comprises information of at least one device or component connected to a hardware bus that is in communication with the hardware-application component.

In this way, the initial configuration setting comprises information, for instance, an ID or the configuration settings of the devices and/or components that are in communication by a bus with the hardware-application component. A change of the device and/or components being in communication with the hardware-application component can be noticed through the periodically or randomly probe and according to the defined policy, the hardware-application component is further processed.

In a still further possible embodiment of the method according to the first aspect of the present invention the hardware bus is chosen from a group of hardware-buses comprising at least an advanced microcontroller bus architecture, AMBA, an advanced high-performance bus, AHB, an advanced extensible bus, AXI, a wishbone bus and/or a peripheral component interconnect express bus, PCIe.

In this way, the protocols of the different types of bus systems and its signal and communication behaviour can be used to identify mismatches between the initial configuration setting and the current configuration setting.

In a still further possible embodiment of the method according to the first aspect of the present invention the initial configuration setting comprises timing information for a communication behaviour of the hardware bus.

A hardware bus interface typically consists of, for instance, a set of address lines, a set of data lines, and a set of control signals. Each different hardware bus architecture uses a different bus protocol. According to the invention, the hardware-application component can check the signals send by the bus or by the bus controller, whether the bus and also the signals of the bus are reacting as defined in the bus protocol. For instance, does the received signals from the bus belong to an AMBA, AHB, or AXI bus, or does the received signals act as signals from the expected bus. The hardware-application component basically monitors the behaviour of the signal lines and determine the type and/or characteristic of the signals or the sequence of signals received whether they match the expected signals or not.

Furthermore, it is possible to determine certain delays for certain signals in the bus architecture, such as clock cycles. According to the specification of the bus architecture and hardware used, each interface needs a specific time period to set signal, for instance, handshake signals. If it is noticed that is done with a different time period as expected, it could be an indication that the hardware that the hardware-application component is communicating with is not what it expected to be. Further, the communication of other connected components, such as a direct memory access (DMA) transfer can be monitored. The DMA allows connected peripheral devices to communicate directly with the main memory without detour via the processor. The advantage of direct memory access is faster data transfer while reducing the load on the processor. If the data transfer may take on average 10ms and if the hardware-application component notice that the transfer is taking way longer or way shorter, than expected on average or it had initially measured, this could also be an indicator that something with the processor or software is not as it is expected by the hardware-application component.

In a still further possible embodiment of the method according to the first aspect of the present invention the initial configuration setting comprises timing information for a communication behaviour of at least one I/O interface.

The timing information and also ID of, for instance, I/O interfaces can be from peripherals. If a hardware-application component is connected to a peripheral directly by an I/O interface and/or a bus, a check for the ID can be performed at first to identify the external component.

In a still further embodiment of the method according to the first aspect of the present invention the hardware-application component can check the start value of certain signals when it is loaded in the execution environment. When the hardware-application component is started, it can be checked whether the signals have certain interface levels as expected.

In a still further possible embodiment of the method according to the first aspect of the present invention the initial configuration setting comprises a configurable combination of initial configurations.

In this way, the hardware-application component can monitor whether its execution environment, i.e. other hardware components realized on the same configurable hardware module have changed (other components and/or changed behaviour). This allows, the realization of combinations of initial configuration setting. The combinations of initial configuration settings are configurable, for instance, two out of three different initial configuration settings have to be fulfilled. Using this it is possible to allow that only a certain number or type of surrounding design identifier are available to allow execution of the hardware-application component. The option to match only two out of three initial configuration settings allows for certain design identifier to be changed. This provides a more flexible option. If the hardware-application component is not classified as critical, it is possible that the hardware-application app continues to run when only two out of three initial configuration settings are matched by the current configuration setting. In case of a more highly secure or critical classified hardware-application component, all initial configuration settings have to match the current configuration settings.

As an example, the hardware-application component is in communication over an AXI bus with further components. A first criteria can be, for instance, the bus timing of the AXI bus, and the second criteria can be, for instance, that certain peripherals are connected to the device, and the third criteria can be, for instance a DMA transfer or answer. In the initial configuration setting it can be specified that two out these three criteria have to be fulfilled. In another example, the hardware-application component can detect in total five different current configuration settings, wherein two of these criteria are not seen as critical and then automatically if have three out of five.

In a still further possible embodiment of the method according to the first aspect of the present invention the instantiated hardware-application component verifies the determined current configuration settings of the execution environment periodically or randomly.

In this way, the hardware-application component calculates and stores the initial configuration when it uploaded and executed in the execution environment for the first time. The hardware-application component compares the initial configuration setting in random or periodic intervals. The periodic intervals can be configurable. The length of the periodic intervals depends on the hardware-application component itself, the functionality performed by the hardware-application component, and on the security level of the hardware-application component. The duration may be, for instance, a certain amount of clock cycles, e.g. 10.000 clock cycles, or every 1 million clock cycles.

In the following possible embodiments of the different aspects of the present invention are described in more detail with reference to the enclosed figures.
- Fig. 1: shows a schematic diagram of a specific example for illustrating the runtime integrity protection of a hardware-application component execution environment;
- Fig. 2: shows a flowchart of a possible exemplary embodiment of a method for verifying at runtime of a hardware-application component a current configuration setting of an execution environment provided by a configurable hardware module.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

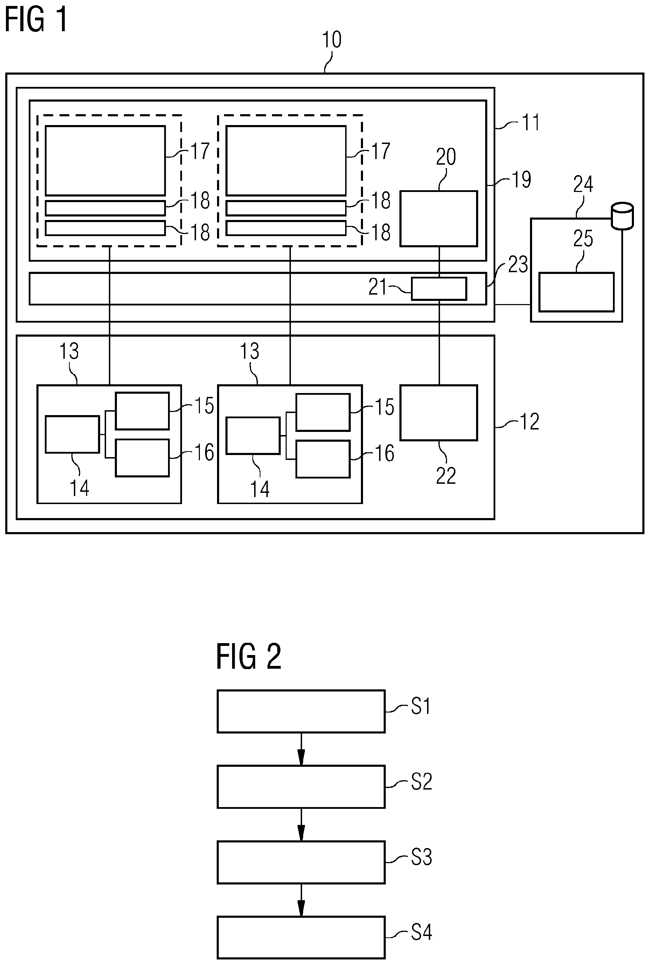

Fig. 1 shows a schematically a specific example illustrating the runtime integrity protection of a hardware-application component execution environment according to the present invention. In the illustrated exemplary embodiment an embedded device 10, e.g. a device of the industry may comprise a configurable hardware module 12, such as an FPGA and a central processing unit 11 (CPU). The FPGA and CPU are provided as separate components. In an alternative embodiment, the CPU 19, and storage unit 13 can be implemented by a system on a chip design, wherein the components are realized on a single chip. In a further alternative embodiment, is the CPU provided by a reconfigurable ASIC. Therefore, the software application can deploy hardware-applications to hardware to either use the hardware in a more flexible manner or simply re-use the resources available in a more efficient way.

Due to the changing industrial environments, the use of dynamically reconfigurable modules 12 in embedded devices 10 is gaining rise. In the context of partially reconfigurable FPGAs, the hardware-application 18 are instantiated within partially reconfigurable regions (PRRs), and their execution environment 13 consists of the PRR configurations and the firewall setting. When an application bundle is transferred to an embedded device 10, it consists of a software application 17, one or more hardware-application 18 and a manifest comprising the PRR interface configuration settings.

A trustworthy software component, i.e., a reconfiguration and update manger 20 (RUM) assigns a PRR region to each hardware-application and manages the corresponding user- and kernel space setting 21. An operation system/kernel component 23 forms the interface between the hardware-application component and the user space 19 and its software application 17 and comprises the drivers for the operation system. The operation system provides the runtime environment.

On the configurable hardware module 12 side, a corresponding hardware module 22 implements the partial reconfiguration logic (PR-logic). The PR-logic 12 takes over the reconfiguration process and locks the PPRs to the assigned hardware-application. The PR-logic 12 ensures that each PRR can be configured by the assigned software component only. Additionally, it ensures that during the PRR reconfiguration with the appropriate hardware-application 18, for instance, distinct as a partial bitstream (PB), the corresponding interface-settings, i.e., firewall configuration are also put in-place.

The non-volatile memory unit 13 stores all information that are necessary to re-boot the embedded device 10. The information comprises the firewall system, the operation system, the hardware application packages 14.

In connection with the invention, a software application 17 comprises the hardware-application 18, for instance, a partial bitstream that can be uploaded in the execution environment 13, for instance, a partial reconfigurable region. The partial bitstream can be used to configure the partial region and to instantiate a hardware-application component in this execution environment 13 so that the software-application can use this region for further processing. The partial bitstream specifies how the execution environment as well as the instantiated hardware-application component 13 will be configured.

In Fig. 1 two hardware-application components 14 that are in instantiated in two execution environments 13 are exemplary shown. The number of hardware-application components as well as of executions environments 13 on the configurable hardware module 12 is not limited to the number as shown in Fig. 1. It is rather conceivable that further partial reconfigurable regions and hardware-application apps can be generated and instantiated.

The initial configuration setting 15 can be in an embodiment hardcoded in the hardware-application component 14 and therefore provided with the hardware-application 18. During the first execution of the hardware-application component 14, the hardware-application component 14 performs a calculation to get the current configuration setting 16 that should match the initial configuration setting 15 provided with the bitstream 18. If the current and initial configuration setting match, the hardware-application component continues working. Depending on the defined policy, in case of a mismatch between the initial configuration setting 15 and the current configuration setting 16, an alarm can be generated, or the operation of the hardware-application component 13 can be terminated, access to certain functionalities of the hardware-application component 14 can be disabled, or sensitive hardware-application component data can be erased.

In a further embodiment, the hardware-application 18 comes without an initial configuration setting 15. The initial configuration setting 15 is calculated when the hardware-application component 14 is executed the first time. At runtime the hardware-application component 14 determine the current configuration setting 16 of the execution environment 13 and compares it with the initial configuration setting 15. If the current and initial configuration setting match, the hardware-application component continues working. Depending on the defined policy, in case of a mismatch between the initial configuration setting 15 and the current configuration setting 16, an alarm can be generated, or the operation of the hardware-application component 13 can be terminated, access to certain functionalities of the hardware-application component 14 can be disabled, or sensitive hardware-application component data can be erased.

Fig. 2 shows a flowchart of a possible exemplary embodiment of a method for verifying at runtime of a hardware-application component a current configuration setting of an execution environment provided by a configurable hardware module.

The method comprises in the illustrated exemplary embodiment several main steps. In a first step S1, a hardware-application 18, is received by the configurable hardware module 12, wherein the received hardware-application 18 comprises configuration data describing an instantiation as the hardware-application component 14 on the configurable hardware module 12.

In a further step S2, the received hardware-application 18 is instantiated as the hardware-application component 14 in the execution environment 13 of the configurable hardware module 12.

In a further step S3, the current configuration setting 16 of the execution environment 13 provided by the configurable hardware module 22 is determined by the instantiated hardware-application component 14 at runtime;

In a further step S4, the determined current configuration setting 16 of the execution environment 13 of the instantiated hardware-application component 14) is verified by the instantiated hardware-application component 14 as admissible for execution of the instantiated hardware-application component 14 if the determined current configuration setting 16 of the execution environment 13 matches an initial configuration setting 15 of the execution environment 13 at runtime of the hardware-application component 14.

The hardware-application component 14 is an instantiation of the hardware-application 18 in the execution environment 13 of the configurable hardware module 12. The hardware-application component 14 determines the current configuration setting 16 of its execution environment 13 at runtime periodically or randomly. If the determined current configurations setting 16 match an initial current configuration setting 15, the hardware-application component 14 continues working. Depending on the defined policy, in case of a mismatch between the initial configuration setting 15 and the current configuration setting 16, an alarm can be generated, or the operation of the hardware-application component 13 can be terminated, access to certain functionalities of the hardware-application component 14 can be disabled, or sensitive hardware-application component data can be erased. The initial configuration setting 15 is the current configuration setting 16 of the execution environment when the hardware-application component 14 is executed for the first time.

An alternative embodiment comprises the hardware-application 18, the initial configuration setting 15, and is hardcoded in the hardware-application component 14.

In summary, the invention relates to a method for verifying at runtime of a hardware-application component 100 a current configuration setting 16 of an execution environment 13 provided by a configurable hardware module 12, wherein the execution environment 13 is used for execution of at least one hardware-application 18. In a first step S1 a hardware-application 18 is received by the configurable hardware module 12, wherein the received hardware-application 18 comprises configuration data describing an instantiation as the hardware-application component 14 on the configurable hardware module 12. In a further step S2 the received hardware-application 18 is instantiated as the hardware-application component 14 in the execution environment 13 of the configurable hardware module 12. In a further step S3, the current configuration setting 16 of the execution environment 13 provided by the configurable hardware module 12 is determined by the instantiated hardware-application component 14 at runtime, and in further step S4 the determined current configuration setting 16 of the execution environment 13 of the instantiated hardware-application component 14 is verified by the instantiated hardware-application component 14 as admissible for execution of the instantiated hardware-application component 14 if the determined current configuration setting 16 of the execution environment 13 matches an initial configuration setting 15 of the execution environment 13 at runtime of the hardware-application component 14.

Due to the present invention, a hardware-application component 14 can monitor and verify the integrity of its execution environment 13 at runtime.

### Reference numerals

- 10: embedded device
- 11: central processing unit
- 12: configurable hardware module
- 13: execution environment
- 14: hardware-application component
- 15: initial configuration setting
- 16: current configuration setting
- 17: software application
- 18: hardware-application
- 19: user space
- 20: reconfiguration and update manager
- 21: configuration data
- 22: partially reconfiguration logic
- 23: operation system
- 24: non-volatile storage
- 25: hardware/software application packages
- S1-S4: method steps

## Claims

1. A method for verifying at runtime of a hardware-application component (100) a current configuration setting (16) of an execution environment (13) provided by a configurable hardware module (12), wherein the execution environment (13) is used for execution of at least one hardware-application (18) comprising the steps of:
Receiving (S1) by the configurable hardware module (12) a hardware-application (18), wherein the received hardware-application (18) comprises configuration data describing an instantiation as the hardware-application component (14) on the configurable hardware module (12);
Instantiating (S2) the received hardware-application (18) as the hardware-application component (14) in the execution environment (13) of the configurable hardware module (12);
Determining (S3) by the instantiated hardware-application component (14) at runtime the current configuration setting (16) of the execution environment (13) provided by the configurable hardware module (12); and
Verifying (S4) by the instantiated hardware-application component (14) the determined current configuration setting (16) of the execution environment (13) of the instantiated hardware-application component (14) as admissible for execution of the instantiated hardware-application component (14) if the determined current configuration setting (16) of the execution environment (13) matches an initial configuration setting (15) of the execution environment (13) at runtime of the hardware-application component (14),
wherein the initial configuration setting (15) is determined while executing the instantiated hardware-application component (14) the first time in the execution environment (13) of the configurable hardware module (12), and
**characterized in that** the initial configuration setting (15) comprises information of the specific and unique design identifier of the configurable hardware module (12).

2. The method according to claim 1, wherein the hardware-application component (14) changes into a hardware operation mode if the determined current configuration setting (16) of the execution environment (13) does not match the initial configuration setting (15), wherein the hardware operation mode comprises at least:
- Generating an alarm;
- Terminating the execution of the hardware-application component (14);
- Disabling the access to certain functionalities of the hardware-application component (14); and/or
- Erasing data of the hardware-application component (14) .

3. The method according to any of the preceding claims 1 and 2, wherein the execution environment (13) of the configurable hardware module (12) comprises a reconfiguration region, RR, of the configurable hardware module (12) and/or at least one partial reconfiguration region, PRR, of the reconfiguration region, RR, of the configurable hardware module (12).

4. The method according to any of the preceding claims 1 to 3, wherein the configurable hardware module (12) comprises a field programmable gate array, FPGA, an application specific integrated circuit, ASIC, or an application specific standard product, ASSP.

5. The method according to any of the preceding claims 1 to 4, wherein the initial configuration setting (15) is provided by the hardware-application (18).

6. The method according to claim 5, wherein the initial configuration setting (15) comprises reference information of valid execution environments (13) for executing the hardware-application component (14).

7. The method according to any of the preceding claims 1 to 6, wherein the initial configuration setting (15) comprises information of at least one device or component connected to a hardware bus that is in communication with the hardware-application component (14).

8. The method according to claim 7, wherein the hardware bus is chosen from a group of hardware-buses comprising at least an advanced microcontroller bus architecture, AMBA, an advanced high-performance bus, AHB, an advanced extensible bus, AXI, a wishbone bus and/or a peripheral component interconnect express bus, PCIe.

9. The method according to any of the preceding claims 7 and 8, wherein the initial configuration setting (15) comprises timing information for a communication behaviour of the hardware bus.

10. The method according to any of the preceding claims 1 to 6, wherein the initial configuration setting (15) comprises timing information for a communication behaviour of at least one I/O interface.

11. The method according to any of the preceding claims 1 to 6, wherein the initial configuration setting (15) comprises a configurable combination of initial configuration settings (15) according to claims 8 to 12.

12. The method according to any of the preceding claims 1 to 11, wherein the instantiated hardware-application component (14) verifies the determined current configuration settings (16) of the execution environment (13) periodically or randomly.

13. A configurable hardware module (12) configured to receive, instantiate, and execute at least one hardware-application (18) as a hardware-application component (14), executable in at least one execution environment (13) of the configurable hardware module (12), wherein the hardware-application component (14) is adapted to determine and verify at runtime a current configuration setting of the execution environment provided of the configurable hardware module (14) as admissible for execution of the instantiated hardware-application component (13), if the determined current configuration setting (16) of the execution environment (13) matches an initial configuration setting (15) of the execution environment (13) at runtime of the hardware-application component (14),
wherein the initial configuration setting (15) is determined while executing the instantiated hardware-application component (14) the first time in the execution environment (13) of the configurable hardware module (12), and
**characterized in that** the initial configuration setting (15) comprises information of the specific and unique design identifier of the configurable hardware module (12).

## Patentansprüche

1. Verfahren zur Verifizierung, bei Laufzeit einer Komponente einer Hardware-Anwendung (100), einer gegenwärtigen Konfigurationseinstellung (16) einer durch ein konfigurierbares Hardware-Modul (12) bereitgestellten Ausführungsumgebung (13), wobei die Ausführungsumgebung (13) zur Ausführung von mindestens einer Hardware-Anwendung (18) verwendet wird und das Verfahren die folgenden Schritte umfasst:
Empfangen (S1) durch das konfigurierbare Hardware-Modul (12) einer Hardware-Anwendung (18), wobei die empfangene Hardware-Anwendung (18) Konfigurationsdaten umfasst, die eine Instanziierung als die Komponente einer Hardware-Anwendung (14) auf dem konfigurierbaren Hardware-Modul (12) beschreiben,
Instanziieren (S2) der empfangenen Hardware-Anwendung (18) als die Komponente einer Hardware-Anwendung (14) in der Ausführungsumgebung (13) des konfigurierbaren Hardware-Moduls (12),
Bestimmen (S3) durch die instanziierte Komponente einer Hardware-Anwendung (14), bei Laufzeit, der gegenwärtigen Konfigurationseinstellung (16) der durch das konfigurierbare Hardware-Modul (12) bereitgestellten Ausführungsumgebung (13) und
Verifizieren (S4) durch die instanziierte Komponente einer Hardware-Anwendung (14) der bestimmten gegenwärtigen Konfigurationseinstellung (16) der Ausführungsumgebung (13) der instanziierten Komponente einer Hardware-Anwendung (14) als zulässig für die Ausführung der instanziierten Komponente einer Hardware-Anwendung (14), wenn die bestimmte gegenwärtige Konfigurationseinstellung (16) der Ausführungsumgebung (13) mit einer anfänglichen Konfigurationseinstellung (15) der Ausführungsumgebung (13) bei Laufzeit der Komponente einer Hardware-Anwendung (14) übereinstimmt,
wobei die anfängliche Konfigurationseinstellung (15) bestimmt wird, während die instanziierte Komponente einer Hardware-Anwendung (14) zum ersten Mal in der Ausführungsumgebung (13) des konfigurierbaren Hardware-Moduls (12) ausgeführt wird, und
**dadurch gekennzeichnet, dass**
die anfängliche Konfigurationseinstellung (15) Informationen des bestimmten und eindeutigen Gestaltungsidentifikators des konfigurierbaren Hardware-Moduls (12) umfasst.

2. Verfahren nach Anspruch 1, wobei die Komponente einer Hardware-Anwendung (14) in eine Hardware-Betriebsart wechselt, wenn die bestimmte gegenwärtige Konfigurationseinstellung (16) der Ausführungsumgebung (13) nicht mit der anfänglichen Konfigurationseinstellung (15) übereinstimmt, wobei die Hardware-Betriebsart mindestens Folgendes umfasst:
- Erzeugen eines Alarms,
- Beenden der Ausführung der Komponente einer Hardware-Anwendung (14),
- Deaktivieren des Zugriffs auf bestimmte Funktionalitäten der Komponente einer Hardware-Anwendung (14) und/oder
- Löschen von Daten der Komponente einer Hardware-Anwendung (14).

3. Verfahren nach einem der vorhergehenden Ansprüche 1 und 2, wobei die Ausführungsumgebung (13) des konfigurierbaren Hardware-Moduls (12) eine Rekonfigurationsregion, RR, des konfigurierbaren Hardware-Moduls (12) und/oder mindestens eine partielle Rekonfigurationsregion, PRR, des konfigurierbaren Hardware-Moduls (12) umfasst.

4. Verfahren nach einem der vorhergehenden Ansprüche 1 bis 3, wobei das konfigurierbare Hardware-Modul (12) ein feldprogrammierbares Gate-Array, FPGA, eine anwendungsspezifische integrierte Schaltung, ASIC, oder ein anwendungsspezifisches Standardprodukt, ASSP, umfasst.

5. Verfahren nach einem der vorhergehenden Ansprüche 1 bis 4, wobei die anfängliche Konfigurationseinstellung (15) durch die Hardware-Anwendung (18) bereitgestellt wird.

6. Verfahren nach Anspruch 5, wobei die anfängliche Konfigurationseinstellung (15) Referenzinformationen gültiger Ausführungsumgebungen (13) zur Ausführung der Komponente einer Hardware-Anwendung (14) umfasst.

7. Verfahren nach einem der vorhergehenden Ansprüche 1 bis 6, wobei die anfängliche Konfigurationseinstellung (15) Informationen mindestens einer Einrichtung oder Komponente umfasst, die mit einem Hardware-Bus, der in Kommunikation mit der Komponente einer Hardware-Anwendung (14) steht, verbunden ist.

8. Verfahren nach Anspruch 7, wobei der Hardware-Bus aus einer Gruppe von Hardware-Bussen gewählt wird, die mindestens eine Advanced Microcontroller Bus Architecture, AMBA, einen Advanced Extensible Bus, AXI, einen Wishbone-Bus und/oder einen Peripheral Component Interconnect express Bus, PCIe, umfasst.

9. Verfahren nach einem der vorhergehenden Ansprüche 7 und 8, wobei die anfängliche Konfigurationseinstellung (15) Zeitinformationen für ein Kommunikationsverhalten des Hardware-Busses umfasst.

10. Verfahren nach einem der vorhergehenden Ansprüche 1 bis 6, wobei die anfängliche Konfigurationseinstellung (15) Zeitinformationen für ein Kommunikationsverhalten von mindestens einer E/A-Schnittstelle umfasst.

11. Verfahren nach einem der vorhergehenden Ansprüche 1 bis 6, wobei die anfängliche Konfigurationseinstellung (15) eine konfigurierbare Kombination von anfänglichen Konfigurationseinstellungen (15) nach den Ansprüchen 8 bis 12 umfasst.

12. Verfahren nach einem der vorhergehenden Ansprüche 1 bis 11, wobei die die instanziierte Komponente einer Hardware-Anwendung (14) die bestimmten gegenwärtigen Konfigurationseinstellungen (16) der Ausführungsumgebung (13) periodisch oder zufällig verifiziert.

13. Konfigurierbares Hardware-Modul (12), das dazu konfiguriert ist, mindestens eine Hardware-Anwendung (18) zu empfangen, zu instanziieren und als eine Komponente einer Hardware-Anwendung (14) auszuführen, die in mindestens einer Ausführungsumgebung (13) des konfigurierbaren Hardware-Moduls (12) ausführbar ist, wobei die Komponente einer Hardware-Anwendung (14) dazu angepasst ist, bei Laufzeit eine gegenwärtige Konfigurationseinstellung der durch das konfigurierbare Hardware-Modul (14) bereitgestellten Ausführungsumgebung zu bestimmen und als zulässig für die Ausführung der instanziierten Komponente einer Hardware-Anwendung (13) zu verifizieren, wenn die bestimmte gegenwärtige Konfigurationseinstellung (16) der Ausführungsumgebung (13) mit einer anfänglichen Konfigurationseinstellung (15) der Ausführungsumgebung (13) bei Laufzeit der Komponente einer Hardware-Anwendung (14) übereinstimmt,
wobei die anfängliche Konfigurationseinstellung (15) bestimmt wird, während die instanziierte Komponente einer Hardware-Anwendung (14) zum ersten Mal in der Ausführungsumgebung (13) des konfigurierbaren Hardware-Moduls (12) ausgeführt wird, und
**dadurch gekennzeichnet, dass**
die anfängliche Konfigurationseinstellung (15) Informationen des bestimmten und eindeutigen Gestaltungsidentifikators des konfigurierbaren Hardware-Moduls (12) umfasst.

## Revendications

1. Procédé pour la vérification, pendant le fonctionnement d'un composant d'application matérielle (100), d'un paramètre de configuration actuel (16) d'un environnement d'exécution (13) fourni par un module matériel configurable (12), dans lequel l'environnement d'exécution (13) est utilisé pour l'exécution d'au moins une application matérielle (18), comprenant les étapes de :
la réception (S1), par le module matériel configurable (12), d'une application matérielle (18), dans lequel l'application matérielle (18) reçue comprend des données de configuration décrivant une instanciation sous la forme du composant d'application matérielle (14) sur le module matériel configurable (12) ;
l'instanciation (S2) de l'application matérielle (18) reçue sous la forme du composant d'application matérielle (14) dans l'environnement d'exécution (13) du module matériel configurable (12) ;
la détermination (S3), par le composant d'application matérielle (14) instancié pendant le fonctionnement, du paramètre de configuration actuel (16) de l'environnement d'exécution (13) fourni par le module matériel configurable (12) ; et
la vérification (S4), par le composant d'application matérielle (14) instancié, du paramètre de configuration actuel (16) déterminé de l'environnement d'exécution (13) du composant d'application matérielle (14) instancié comme étant admissible pour l'exécution du composant d'application matérielle (14) instancié si le paramètre de configuration actuel (16) déterminé de l'environnement d'exécution (13) concorde avec un paramètre de configuration initial (15) de l'environnement d'exécution (13) pendant le fonctionnement du composant d'application matérielle (14),
dans lequel le paramètre de configuration initial (15) est déterminé tout en exécutant le composant d'application matérielle (14) instancié la première fois dans l'environnement d'exécution (13) du module matériel configurable (12), et
**caractérisé en ce que** le paramètre de configuration initial (15) comprend des informations de l'identifiant de conception spécifique et unique du module matériel configurable (12).

2. Procédé selon la revendication 1, dans lequel le composant d'application matérielle (14) passe dans un mode d'opération de matériel si le paramètre de configuration actuel (16) déterminé de l'environnement d'exécution (13) ne concorde pas avec le paramètre de configuration initial (15), dans lequel le mode d'opération de matériel comprend au moins :
- la génération d'une alarme ;
- l'achèvement de l'exécution du composant d'application matérielle (14) ;
- la désactivation de l'accès à certaines fonctionnalités du composant d'application matérielle (14) ; et/ou
- l'effacement de données du composant d'application matérielle (14).

3. Procédé selon l'une quelconque des revendications 1 et 2 précédentes, dans lequel l'environnement d'exécution (13) du module matériel configurable (12) comprend une région de reconfiguration, RR, du module matériel configurable (12) et/ou au moins une région de reconfiguration partielle, PRR, de la région de reconfiguration, RR, du module matériel configurable (12) .

4. Procédé selon l'une quelconque des revendications 1 à 3 précédentes, dans lequel le module matériel configurable (12) comprend une matrice pré-diffusée programmable par l'utilisateur, FPGA, un circuit intégré spécifique à une application, ASIC, ou un produit standard spécifique à une application, ASSP.

5. Procédé selon l'une quelconque des revendications 1 à 4 précédentes, dans lequel le paramètre de configuration initial (15) est fourni par l'application matérielle (18).

6. Procédé selon la revendication 5, dans lequel le paramètre de configuration initial (15) comprend des informations de référence d'environnements d'exécution (13) valides pour l'exécution du composant d'application matérielle (14).

7. Procédé selon l'une quelconque des revendications 1 à 6 précédentes, dans lequel le paramètre de configuration initial (15) comprend des informations d'au moins un dispositif ou composant connecté à un bus matériel qui est en communication avec le composant d'application matérielle (14).

8. Procédé selon la revendication 7, dans lequel le bus matériel est choisi parmi un groupe de bus matériels comprenant au moins une architecture de bus de microcontrôleur avancé, AMBA, un bus à haute performance avancé, AHB, un bus extensible avancé, AXI, un bus « wishbone » et/ou un bus d'interconnexion de composants périphériques express, PCie.

9. Procédé selon l'une quelconque des revendications 7 et 8 précédentes, dans lequel le paramètre de configuration initial (15) comprend des informations de temporisation pour un comportement de communication du bus matériel.

10. Procédé selon l'une quelconque des revendications 1 à 6 précédentes, dans lequel le paramètre de configuration initial (15) comprend des informations de temporisation pour un comportement de communication d'au moins une interface I/O.

11. Procédé selon l'une quelconque des revendications 1 à 6 précédentes, dans lequel le paramètre de configuration initial (15) comprend une combinaison configurable de paramètres de configuration initiaux (15) selon les revendications 8 à 12.

12. Procédé selon l'une quelconque des revendications 1 à 11 précédentes, dans lequel le composant d'application matérielle (14) instancié vérifie les paramètres de configuration actuels (16) déterminés de l'environnement d'exécution (13) de manière périodique ou aléatoire.

13. Module matériel configurable (12) configuré pour recevoir, instancier et exécuter au moins une application matérielle (18) sous la forme d'un composant d'application matérielle (14), exécutable dans au moins un environnement d'exécution (13) du module matériel configurable (12), dans lequel le composant d'application matérielle (14) est adapté pour déterminer et vérifier, pendant le fonctionnement, un paramètre de configuration actuel de l'environnement d'exécution fourni du module matériel configurable (14) comme étant admissible pour l'exécution du composant d'application matérielle (13) instancié, si le paramètre de configuration actuel (16) déterminé de l'environnement d'exécution (13) concorde avec un paramètre de configuration initial (15) de l'environnement d'exécution (13) pendant le fonctionnement du composant d'application matérielle (14),
dans lequel le paramètre de configuration initial (15) est déterminé tout en exécutant le composant d'application matérielle (14) instancié la première fois dans l'environnement d'exécution (13) du module matériel configurable (12), et **caractérisé en ce que** le paramètre de configuration initial (15) comprend des informations de l'identifiant de conception spécifique et unique du module matériel configurable (12).
